# EUROPÄISCHE PATENTANMELDUNG

(11) **EP 1 028 348 A1**
(43) Veröffentlichungstag der Anmeldung: **16.08.2000**
(21) Anmeldenummer: 99125494.7
(22) Anmeldetag: 21.12.1999
(51) Int. Cl.: G02F 1/1335, B60K 37/02

(54) **Streuscheibe mit variabler Dicke**

(30) Priorität: 09.02.1999 DE 19905217
(71) Anmelder: Mannesmann VDO Aktiengesellschaft, 60388 Frankfurt am Main (DE)
(72) Erfinder: Noll, Heinrich, Dr., 64832 Gross-Umstadt (DE)
(74) Vertreter: Klein, Thomas, Dipl.-Ing.

(57) **Zusammenfassung**

Hinter einer von Lampen (4, 4', 4") gleichmäßig zu durchleuchtenden Fläche (1) ist zwischen den Lampen (4, 4', 4") und der Fläche (1) eine Scheibe (6) angeordnet, welche im Bereich der Lampen (4, 4', 4") ihre größte Dicke hat. Dadurch sind die Lichtverluste in diesen Bereichen höher als in den übrigen Bereichen, so dass die Fläche (1) insgesamt gleichmäßig durchleuchtet wird.

## Beschreibung

Die Erfindung betrifft eine Vorrichtung zur Vergleichmäßigung der Ausleuchtung einer von zumindest einer Lichtquelle im Durchlichtverfahren beleuchteten Fläche, insbesondere eines Zifferblattes, Displays oder dergleichen in einem Fahrzeug, welche hinter der Fläche eine von der Lichtquelle durchleuchtete Scheibe aufweist.

Vorrichtungen der vorstehenden Art werden derzeit als Streuscheibe ausgebildet. Sie vermindern, dass bei einem Zifferblatt die nahe einer Lampe liegenden Bereiche stärker durchleuchtet werden als weiter entfernte Bereiche und ermöglichen auch mit wenigen Lampen eine gleichmäßigere Ausleuchtung der Fläche. Statt eine Streuscheibe zu verwenden oder zusätzlich zu dieser, ist es auch bekannt, auf dem Zifferblatt einen Rasterdruck aufzubringen, durch den man in unterschiedlichen Bereichen eine unterschiedliche Lichtdurchlässigkeit erreichen und deshalb im Bereich der Lampen für eine Abdunklung sorgen kann.

Die Streuscheibe bewirkt eine diffuse Beleuchtung, wodurch eine unmittelbare Erkennbarkeit von hinter der Streuscheibe angeordneten Strukturen gegebenenfalls abgeschwächt werden kann. Mittels der Streuscheibe ist eine gleichmäßige Ausleuchtung aber allenfalls im Mikrobereich zu erzielen, das heißt nur eine scharfe Abbildung von Strukturen kann vermindert werden. Zu einer gleichmäßigen Ausleuchtung der Fläche trägt die Streuscheibe nachteilhaft im wesentlichen nicht bei.

Die bekannten Streuscheiben haben weiterhin den Nachteil, über ihren gesamten Querschnitt die Ausleuchtung zu vermindern, so dass entsprechend starke Lichtquellen erforderlich werden. Der Rasterdruck bedingt unerwünscht hohe Kosten, da für seine Aufbringung ein zusätzlicher Arbeitsgang notwendig wird. Ein weiterer Nachteil des Rasterdruckes liegt darin, dass die Farbe des Rasterdruckes zu Farbverschiebungen führen kann und die Rasterpunkte auf der zu beleuchtenden Fläche sichtbar werden können.

Der Erfindung liegt das Problem zugrunde, eine Vorrichtung zur Vergleichmäßigung der Ausleuchtung einer von zumindest einer Lichtquelle im Durchlichtverfahren beleuchteten Fläche zu entwickeln, welche Vorrichtung das zu der Fläche gelangende Licht möglichst wenig abschwächt und die möglichst kostengünstig zu realisieren ist.

Dieses Problem wird erfindungsgemäß dadurch gelöst, dass die Scheibe zur Vergleichmäßigung der Ausleuchtung über den Querschnitt der Fläche eine unterschiedliche Dicke aufweist.

Eine solche Scheibe ist durch eine der Lichtverteilung entsprechende, schwankende Dicke in der Lage, nur dort das zu der auszuleuchtenden Fläche gelangende Licht durch eine entsprechende Dicke abzuschwächen, wo es erforderlich ist, in den übrigen Bereichen jedoch aufgrund einer geringen Dicke das Licht nahezu unabgeschwächt durchzulassen. Dadurch wird der Lichtverlust im Vergleich zu den bisher verwendeten Streuscheiben geringer und tritt nur dort ein, wo er wünschenswert ist.

Die gewünschte Vergleichmäßigung kann man dadurch erreichen, dass die Scheibe aus einem schwach lichtabsorbierenden Material besteht. Solche Materialien können im Kunststoffspritzgießverfahren leicht verarbeitet werden, so dass die Erzeugung unterschiedlicher Dicken gegenüber plan ausgeführten Scheiben so gut wie keine Mehrkosten bedingt.

Statt das Licht in den erwünschten Bereichen durch Absorption abzuschwächen oder zusätzlich hierzu, ist es gemäß einer Weiterbildung der Erfindung auch möglich, dass die Scheibe aus einem lichtstreuenden Material besteht. Auch in einem solchen Fall kann man gezielt in erwünschten Bereichen für eine Lichtabschwächung sorgen, indem man die Wandstärke der Scheibe erhöht und dadurch ausschließlich dort eine größere Lichtstreuung verwirklicht. Dieses hat den zusätzlichen, positiven Effekt, daß durch die Streuwirkung zusätzlich Licht in dunklere Bereiche der Scheibe geleitet wird und diese Bereiche somit aufgehellt werden.

Die Lichtverluste sind besonders gering, wenn die Scheibe aus Polymethylmethacrylat (PMMA), einem hochtransparenten Material, besteht. Ein solcher Kunststoff ist zudem sehr leicht im Spritzgießverfahren zu verarbeiten.

Die Streuwirkung des Materials kann man auf einfache Weise dadurch erreichen, dass das Material für die Scheibe lichtstreuende Bestandteile enthält.

Die lichtstreuenden Bestandteile sind besonders wirkungsvoll, wenn es sich dabei um Titandioxid oder Glaskugeln handelt. Unter Glaskugeln sind dabei allgemein in das Grundmaterial der Scheibe eingelagerte Körper mit einem von dem Brechungsindex des Grundmaterials verschiedenen Brechungsindex zu verstehen. Dabei müssen die eingelagerten Körper gegenüber dem Grundmaterial scharf abgegrenzt sein. Hierfür eignen sich insbesondere Kugeln aus dem Werkstoff Glas.

Wenn das für die Scheibe verwendete Material hochtransparent ist, beispielsweise Acrylglas, dann ist es vorteilhaft, wenn das Material für die Scheibe einen lichtabsorbierenden Zusatz enthält.

Als Zusatz sind dabei Farbpigmente, insbesondere graue Farbpigmente, oder Ruß vorteilhaft.

Möglich ist es auch, die Vergleichmäßigung der Ausleuchtung durch zwei unterschiedliche Mittel zu verwirklichen, indem die Scheibe zusätzlich mit einem Rasterdruck versehen ist. Hierdurch kann man beispielsweise für Bereiche mit überdurchschnittlicher Helligkeit den Rasterdruck verwenden, um dort eine starke Abschwächung des Lichtes zu erreichen, ohne dass dort die Scheibe unerwünscht dick werden muss.

Ein Abschwächung des Lichtes in Bereichen, zu denen besonders wenig Licht gelangt, kann man gänzlich ausschließen, wenn gemäß einer anderen Weiterbildung der Erfindung die Scheibe zumindest eine Durchbrechung aufweist. Im Bereich einer solchen Durchbrechung kann dann das Licht beispielsweise aus einem Lichtkasten ungehindert zu dem zu durchleuchtenden Zifferblatt oder Display gelangen.

Die Erfindung lässt verschiedene Ausführungsformen zu. Zur weiteren Verdeutlichung ihres Grundprinzips sind zwei davon in der Zeichnung dargestellt und werden nachfolgend beschrieben. Die Zeichnung zeigt in
- Fig. 1: einen Schnitt durch eine Anzeige mit der erfindungsgemäßen Vorrichtung,
- Fig. 2: einen Schnitt durch eine Anzeige mit einer zweiten Ausführungsform einer Vorrichtung nach der Erfindung.

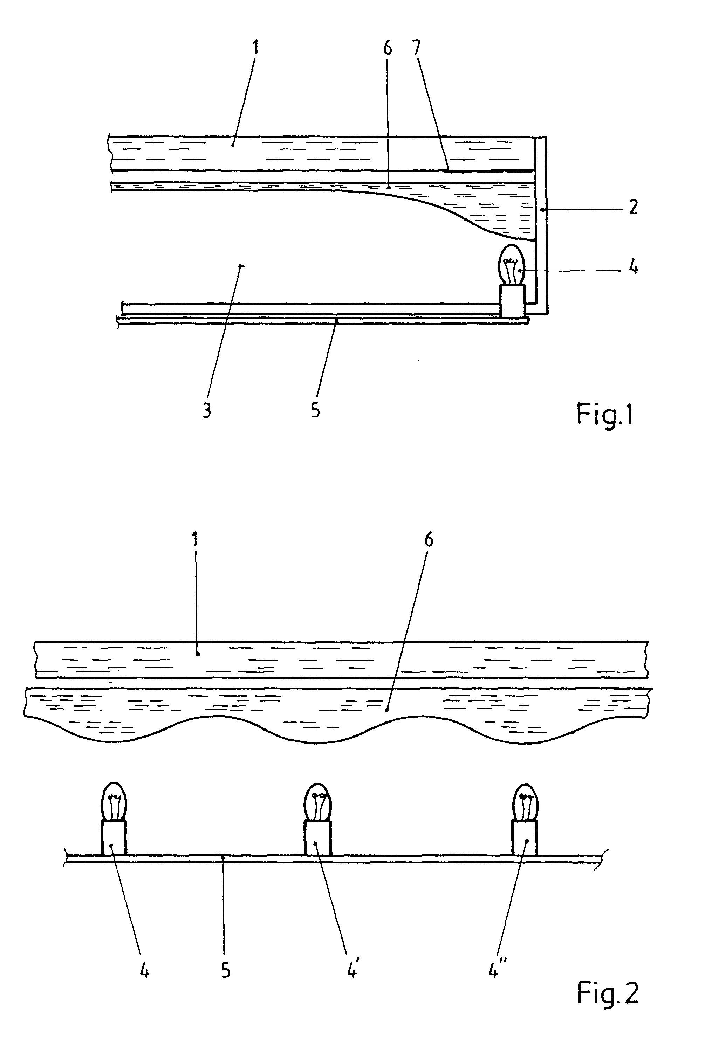

Die Figur 1 zeigt eine als Zifferblatt oder Display, beispielsweise Flüssigkristallzelle, ausgebildete Fläche 1 auf der Vorderseite eines Gehäuses 2, welches hinter der Fläche 1 einen Lichtkasten 3 bildet. Das Gehäuse 2 ist Bestandteil eines nicht weiter dargestellten Kombinationsinstrumentes eines Kraftfahrzeugs. Im Randbereich des Gehäuses 2 ragt eine Lichtquelle 4 in den Lichtkasten 3. Die Lichtquelle 4, bei der es sich z. B. um eine Glühlampe, eine Leuchtdiode oder eine Leuchtstoffröhre handeln kann, ist auf einer Leiterplatte 5 befestigt.

Wichtig für die Erfindung ist, dass zwischen der Fläche 1 und der Lichtquelle 4 eine Scheibe 6 aus einem transparenten Kunststoff angeordnet ist, welche Bestandteile zur Lichtstreuung und/oder -absorption aufweist und im Bereich der Lichtquelle 4 eine größere Dicke hat als im übrigen Bereich. Dadurch wird das von der Lichtquelle 4 in das Zifferblatt 1 gelangende Licht in der Nähe der Lichtquelle 4 abgeschwächt und auf diese Weise die Ausleuchtung des Zifferblattes oder Displays vergleichmäßigt. Will man die Erhöhung der Dicke der Scheibe 6 im Bereich der Lampe 4 gering halten, dann kann man zusätzlich auf der Fläche 1 im Bereich der Lampe 4 einen Rasterdruck 7 aufbringen.

Bei der Ausführungsform nach Figur 2 verläuft die Unterseite der Scheibe 6 sinusförmig gekrümmt. Gegenüber den Bereichen, wo die Scheibe 6 ihre größte Dicke hat, ist jeweils eine Lichtquelle 4, 4' und 4" auf der Leiterplatte 5 angeordnet. Die Fläche 1 wird auf diese Weise gleichmäßig durchleuchtet, weil die Lichtverluste im Bereich der durch die Position der Lichtquellen 4, 4', 4" festgelegten, größten Beleuchtungsstärke am größten sind.

Die örtliche Dicke der Scheibe 6 ist abhängig von der Lichtverteilung im Lichtkasten, wodurch z. B. auch größere Helligkeiten im Bereich von stärker reflektierenden Zonen der Leiterplatte 5 berücksichtigt werden.

Nicht dargestellt ist bei beiden Ausführungsformen, dass die Scheibe 6 zur Lichtstreuung beispielsweise Titandioxid oder Glaskugeln oder zur Absorption Zusätze, wie beispielsweise Farbpigmente oder Ruß, enthalten kann. Mit einem Zusatz von Titandioxid tritt eine vergleichsweise geringe Transmissionsverminderung der Scheibe 6 ein, wohingegen die Verwendung von Glaskugeln die Transmission stärker herabsetzt. Eine noch erheblichere Transmissionsverminderung ergibt sich bei einem Zusatz von (grauen) Pigmenten oder gar Rußpigmenten. Es ist aber zu berücksichtigen, dass unabhängig vom Zusatzstoff eine um so stärkere Verringerung der Transmission erfolgt, je höher die Konzentration des Zusatzstoffes ist.

## Patentansprüche

1. Vorrichtung zur Vergleichmäßigung der Ausleuchtung einer von zumindest einer Lichtquelle im Durchlichtverfahren beleuchteten Fläche, insbesondere eines Zifferblattes, Displays oder dergleichen in einem Fahrzeug, welche hinter der Fläche eine von der Lichtquelle durchleuchtete Scheibe aufweist, **dadurch gekennzeichnet,** dass die Scheibe (6) zur Vergleichmäßigung der Ausleuchtung über den Querschnitt der Fläche (1) eine unterschiedliche Dicke aufweist.

2. Vorrichtung nach Anspruch 1, **dadurch gekennzeichnet,** dass die Scheibe (6) aus einem schwach lichtabsorbierenden Material besteht.

3. Vorrichtung nach Anspruch 1 oder 2, **dadurch gekennzeichnet,** dass die Scheibe (6) aus einem lichtstreuenden Material besteht.

4. Vorrichtung nach einem der vorangehenden Ansprüche, **dadurch gekennzeichnet,** dass die Scheibe (6) aus Polymethylmethacrylat (PMMA) besteht.

5. Vorrichtung nach einem der vorangehenden Ansprüche, **dadurch gekennzeichnet,** dass das Material für die Scheibe (6) lichtstreuende Bestandteile enthält.

6. Vorrichtung nach Anspruch 5, **dadurch gekennzeichnet,** dass die lichtstreuenden Bestandteile Titandioxid oder Glaskugeln sind.

7. Vorrichtung nach einem der vorangehenden Ansprüche, **dadurch gekennzeichnet,** dass das Material für die Scheibe (6) einen lichtabsorbierenden Zusatz enthält.

8. Vorrichtung nach Anspruch 7, **dadurch gekennzeichnet,** dass die Scheibe (6) als Zusatz Farbpigmente enthält.

9. Vorrichtung nach Anspruch 7 oder 8, **dadurch gekennzeichnet,** dass die Scheibe (6) als Zusatz Ruß enthält.

10. Vorrichtung nach einem der vorangehenden Ansprüche, **dadurch gekennzeichnet,** dass die Scheibe (6) zusätzlich mit einem Rasterdruck versehen ist.

11. Vorrichtung nach einem der vorangehenden Ansprüche, **dadurch gekennzeichnet,** dass die Scheibe (6) zumindest eine Durchbrechung aufweist.
